(19) Europäisches Patentamt
European Patent Office
Office européen des brevets

(11) Veröffentlichungsnummer: **0 014 318**
**B1**

# (12) EUROPÄISCHE PATENTSCHRIFT

(45) Veröffentlichungstag der Patentschrift: **23.02.83**

(51) Int. Cl.³: **C 09 B 62/10**, D 06 P 3/66, D 06 P 3/10

(21) Anmeldenummer: **80100077.9**

(22) Anmeldetag: **08.01.80**

(54) **Reaktivfarbstoffe sowie deren Herstellung und Verwendung zum Färben von Hydroxyl- oder Amidgruppen enthaltenden Materialien.**

(30) Priorität: **16.01.79 DE 2901481**

(43) Veröffentlichungstag der Anmeldung: **20.08.80 Patentblatt 80/17**

(45) Bekanntmachung des Hinweises auf die Patenterteilung: **23.02.83 Patentblatt 83/8**

(84) Benannte Vertragsstaaten: **CH DE FR GB**

(56) Entgegenhaltungen: **keine**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Ehrig, Volker, Dr., Odenthaler Markweg 44, D-5060 Bergisch Gladbach 2 (DE)**
Erfinder: **Groll, Manfred, Dr., Haferkamp 6, D-5000 Köln 80 (DE)**
Erfinder: **Wunderlich, Klaus, Dr., Carl-Rumpff-Strasse 21, D-5090 Leverkusen (DE)**

**EP 0 014 318 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Reaktivfarbstoffe sowie deren Herstellung und Verwendung zum Färben von hydroxylgruppen- und stickstoffhaltigen Materialien

Gegenstand der Erfindung sind neue, wasserlösliche Phthalocyaninfarbstoffe, die in Form ihrer freien Säuren der Formel

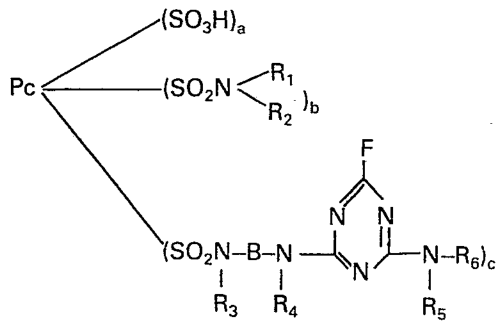

(I)

entsprechen, worin

Pc = Rest eines Kupfer- oder Nickel-Phthalocyanins,

$R_1$, $R_2$ = H, gegebenenfalls substituiertes Alkyl oder worin $R_1$ und $R_2$ zusammen mit N einen 5- oder 6-gliedrigen heterocyclischen Ring bilden,

$R_3$, $R_4$ = H, gegebenenfalls substituiertes Alkyl,

$R_5$, $R_6$ = Wasserstoff, gegebenenfalls substituiertes Alkyl mit 1 bis 5 C-Atomen, gegebenenfalls substituiertes Cycloalkyl oder Aralkyl, gegebenenfalls substituierter Aryl-Rest, der frei von Sulfonsäure- und Carbonsäure-Gruppen ist, oder worin $R_5$ und $R_6$ zusammen mit N einen 5-gliedrigen oder 6-gliedrigen heterocyclischen Ring bilden,

$R_3$, $R_4$ = H, gegebenenfalls substituiertes Alkyl,

$R_5$, $R_6$ = Wasserstoff gegebenenfalls substituiertes Alkyl mit 1 bis 5 C-Atomen, gegebenenfalls substituiertes Cycloalkyl oder Aralkyl, gegebenenfalls substituiertes Aryl-Rest, der frei von Sulfonsäure- und Carbonsäure-Gruppen ist, oder worin $R_5$ und $R_6$ zusammen mit N einen 5-gliedrigen oder 6-gliedrigen heterocyclischen Ring bilden,

B = ein Brückenglied der Reihe 1,2-Phenylen, 1,3-Phenylen, 1,4-Phenylen,

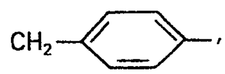 , 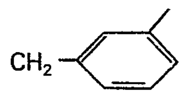 , 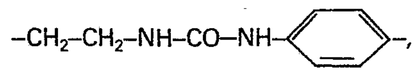 ,

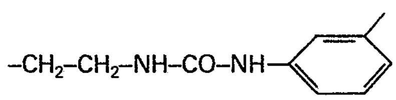 , 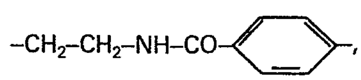 ,

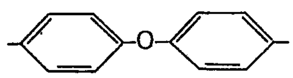 und 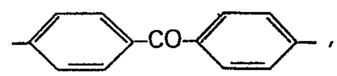 ,

a = 1 bis 3,
b = 0 bis 2,
c = 1 oder 2 und
a+b+c ≦ 4,

wobei jede Sulfonsäure- bzw. Sulfonamidgruppe der Farbstoffe der Formel (I) an einen anderen Benzolring des Phthalocyanins in 3- oder 4-Stellung gebunden ist und wobei die Reste $R_1$ und $R_2$; $R_3$ und $R_4$ und $R_5$ und $R_6$ gleich oder verschieden sein können.

Gegenstand der Erfindung sind weiterhin Mischungen der Farbstoffe der Formel (I) sowie Verfahren zu ihrer Herstellung und Verwendung. Besonders bevorzugt sind folgende Phthalocyaninreaktivfarbstoffe der Formel (I):

A) Phthalocyaninreaktivfarbstoffe der Formel (I),
worin
Pc, $R_1$, $R_2$, $R_3$, $R_4$, $R_5$, $R_6$, B, a und b die oben angegebene Bedeutung besitzen,
C = 1 und a+b+c=2 bis 4.

B) Phthalocyaninreaktivfarbstoffe der Formel (I),
worin
Pc, $R_1$, $R_2$, $R_3$, $R_4$, $R_5$, $R_6$, B die oben angegebene Bedeutung besitzen,
$1<a<3$; $b>0$, $c=1$ und $a+b+c=3$ oder 4.

C) Phthalocyaninreaktivfarbstoffe der Formel (I),
worin
Pc, $R_1$, $R_2$, $R_3$, $R_4$, $R_5$, $R_6$, B die oben angegebene Bedeutung besitzen,
a = 1 oder 2,
b = 0,
c = 1,
a+c=2 oder 3.

Als Beispiele von gegebenenfalls substituierten Alkylresten $R_1$ und $R_2$ seien genannt: $C_1$–$C_5$-Alkylreste, wie Methyl, Ethyl, Propyl, Butyl und Amyl, β-Hydroxyethyl und γ-Hydroxypropyl, β-Carboxyethyl und β-Sulfoethyl.

Beispiele für gegebenenfalls substituierte Alkylreste $R_3$ und $R_4$ sind $C_1$–$C_5$-Alkylreste, wie Methyl-, Ethyl- und Propylreste, β-Hydroxyethyl und γ-Hydroxypropyl.

Die in der GB-PS 1 208 553 offenbarten Phthalocyaninderivate unterscheiden sich eindeutig von den Farbstoffen gemäss vorliegender Erfindung, da die in der GB-PS 1 208 553 enthaltenen Phthalocyanine als Brückenglied Y ausschliesslich eine alipathische Kette aufweisen, während das entsprechende Brückenglied B gemäss vorliegender Anmeldung zwingend einen Aromaten enthält.

Die strukturell verwandten Phthalocyanine aus der FR-PS 1 561 704 sind den erfindungsgemässen Farbstoffen färberisch eindeutig unterlegen. Mit den erfindungsgemässen Farbstoffen erhält man wesentlich intensivere und vor allem gleichmässigere Färbungen als mit denjenigen der FR-PS 1 561 704.

Die neuen Farbstoffe der Formel (I) werden durch Kondensieren geeigneter Ausgangskomponenten dargestellt. Das vorteilhafteste Verfahren besteht darin, dass man Farbstoffe, die in Form ihrer freien Säure der Formel

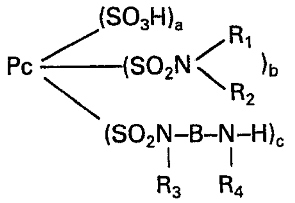

(II)

entsprechen, worin

Pc, $R_1$, $R_2$, $R_3$, $R_4$, B, a, b und c die unter Formel (I) angegebene Bedeutung besitzen, mit c Mol einer Verbindung der Formel

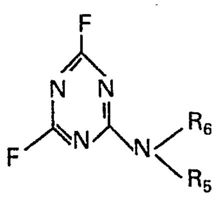

(III)

worin

$R_5$ und $R_6$ die unter Formel (I) angegebene Bedeutung besitzen,

umsetzt,

wobei Pc, $R_1$, $R_2$, $R_3$, $R_4$, $R_5$, $R_6$, B, a, b und c die oben angegebene Bedeutung haben.

Geeignete Amine zur Herstellung der Difluortriazinderivate III sind beispielsweise Ammoniak, Methylamin, Dimethylamin, Ethylamin, Diethylamin, Propylamin, Butylamin, Dibutylamin, Isobutylamin, Amylamin, β-Hydroxyethylamin, γ-Hydroxypropylamin, Methyl-β-hydroxyethylamin, Methoxyethylamin, Ethoxyethylamin, N-β-Hydroxyethyl-N-ethylamin, Aminoessigsäure, Aminpropionsäure, β-Amino-ethansulfonsäure, Cyclohexylamin, 3-Methylcyclohexylamin, Benzylamin, Anilin, 2-Naphthylamin, m-Toluidin, p-Toluidin, 3,4-Dimethylanilin, 3,5-Dimethylanilin, 3-Ethylanilin, 3-Chloranilin, 4-Chloranilin, 3,4-Dichloranilin, 3,5-Dichloranilin, 3-Methyl-4-chloranilin, 4-Methyl-3-chloranilin, 3-Methoxyanilin, 4-Methoxyanilin, 3-Ethoxyanilin, 4-Ethoxyanilin, 3-Nitroanilin, 4-Nitroanilin, 3-Aminobenzoesäureamid, N-Methylanilin, N-Ethylanilin, 3-Aminoacetanilid, 4-Methylaminoacetanilid, Piperidin, Morpholin, o-Toluidin, 2-Methoxyanilin, 2-Ethoxyanilin, 2,4-Dimethylanilin, 2,5-Dimethylanilin, 2-Chloranilin.

Die beim Verfahren gemäss der Erfindung verwendeten Phthalocyaninverbindungen der Formel (II) können dadurch hergestellt werden, dass man ein Phthalocyaninsulfonsäurechlorid – bevorzugt in Form einer wässrigen Suspension – der Formel

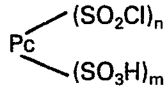

(V)

worin

Pc die oben angegebene Bedeutung hat,

m die Zahlen 0, 1 oder 2 und

n die Zahlen 2, 3 oder 4 bezeichnen, wobei die Summe von m und n nicht grösser als 4 ist, mit Diaminen oder vorzugsweise monoacylierten Diaminen der Formel

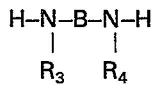

bzw.

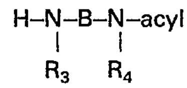

(VIb)

(VIa)

und gegebenenfalls mit einer Verbindung der Formel

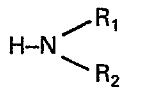

(VII)

wobei

$R_1$, $R_2$, $R_3$ und $R_4$ die oben angegebene Bedeutung haben, umsetzt und im Fall der Verwendung von monoacylierten Diaminen der Formel (VIb) die endständige Acylaminogruppe der erhaltenen Phthalocyaninverbindungen einer sauren oder alkalischen Verseifung unterwirft. Bei dieser Umsetzung werden nicht umgesetzte Sulfonsäurechloridgruppen in Sulfonsäuregruppen übergeführt.

Phthalocyaninsulfochloride bzw. Phthalocyaninsulfochlorid-sulfonsäuren der Formel (V) können dadurch erhalten werden, dass man das entsprechende Phthalocyanin oder die Phthalocyaninsulfonsäure mit Chlorsulfonsäure und gegebenenfalls einem Säurehalogenid, wie Thionylchlorid, Phosphorpentachlorid, Phosphoroxychlorid oder Phosphortrichlorid wie in den britischen Patentschriften 708 543, 784 834 und 785 629 und in der US-Patentschrift 2 219 330 beschrieben, behandelt.

Erfindungsgemäss können einheitliche Phthalocyaninfarbstoffe verwendet werden, das sind solche, in denen die Buchstaben a, b und c die Zahlen 0, 1, 2 bzw. 3 charakterisieren. Darüber hinaus können aber auch Gemische dieser Farbstoffe verwendet werden. Bisweilen zeigen derartige Gemische bezüglich Löslichkeit und Substantivität besondere Vorteile. In solchen Mischungen variieren die Zahlen im gemittelten Wert.

Darartige erfindungsgemässe Gemische werden beispielsweise aus zwei oder mehreren, jeweils einheitlichen Endfarbstoffen der Formel (I) oder besonders vorteilhaft durch Verwendung eines Gemisches der Ausgangskomponenten hergestellt. Letzteres entsteht häufig zwangsläufig,

da die Phthalocyaninsulfinsäurechloridsulfonsäuren (V) bezüglich Sulfierungsgrad und ihres Verhältnisses von Sulfonsäurechloridgruppen und Sulfonsäuregruppen häufig technisch als Gemische anfallen.

Als Beispiele für geeignete monoacylierte Diamine der Formel (VIb) von geeigneten Diaminen der Formel (VIa) seien genannt: 2-Amino-acetanilid, 3-Aminoformanilid, 3-Aminoacetanilid, 4-Aminoformanilid, 4-Aminoacetanilid, 4-Methyl-3-aminoacetanilid, 4-Methyl-3-amino-phenyloxamid, 5-Chlor-4-amino-2-methyl-acetanilid, 4-Methoxy-3-amino-acetanilid, 4-Amino-3-methoxy-acetanilid, 4-Amino-2,5-dichlor-acetanilid, 4-Amino-2-chlor-acetanilid.

Die neuen Farbstoffe sind äusserst wertvolle Produkte, die sich für verschiedenste Anwendungszwecke eignen. Als wasserlösliche Verbindungen finden sie Interesse für das Färben hydroxylgruppenhaltiger und stickstoffhaltiger Textilmaterialien, insbesondere von Textilmaterialien aus nativer und regenerierter Cellulose, ferner aus Wolle, Seide synthetischen Polyamid- und Polyurethanfasern. Sie eignen sich besonders als Reaktivfarbstoffe zum Färben von Cellulosematerialien nach den hierfür in neuerer Zeit bekanntgewordenen Techniken. Die erhaltenen Echtheiten, insbesondere Nassechtheiten, sind ausgezeichnet.

Zum Färben von Cellulose werden die Farbstoffe vorzugsweise in einer wässrigen Lösung eingesetzt, die mit alkalisch reagierenden Stoffen, wie Alkalihydroxyd oder Alkalicarbonat, oder mit in alkalisch reagierende Stoffe übergehenden Verbindungen, wie Alkalibicarbonat, $Cl_3C–COONa$, versetzt werden kann. Der Lösung können weitere Hilfsmittel zugesetzt werden, die jedoch mit den Farbstoffen nicht in unerwünschter Weise reagieren sollen. Solche Zusätze sind beispielsweise oberflächenaktive Substanzen, wie Alkylsulfate, oder die Wanderung des Farbstoffes verhindernde Stoffe oder Färbereihilfsprodukte, wie Harnstoff, oder indifferente Verdickungsmittel, wie Öl-Wasser-Emulsionen, Traganth, Stärke, Alginat oder Methylcellulose.

Die so hergestellten Lösungen oder Pasten werden auf das zu färbende Material beispielsweise durch Aufklotzen im Foulard (kurze Flotte) oder durch Aufdrucken aufgebracht und anschliessend einige Zeit auf erhöhte Temperatur, vorzugsweise 40 bis 150 °C, erhitzt. Das Erhitzen kann in der Hotflue, im Dämpfapparat, auf erhitzten Walzen oder durch Einbringen in erhitzte konzentrierte Salzbäder sowohl für sich allein als auch in beliebiger Reihenfolge hintereinander ausgeführt werden.

Bei Verwendung einer Klotz- oder Färbeflotte ohne Alkali wird eine Passage der trockenen Ware durch eine alkalisch reagierende Lösung, der Kochsalz oder Glaubersalz zugesetzt wird, angeschlossen. Der Salzzusatz vermindert hierbei das Abwandern des Farbstoffes von der Faser.

Man kann ebenfalls das zu färbende Material mit einem der vorgenannten säurebindenden Mittel vorbehandeln, anschliessend mit der Lösung oder Paste des Farbstoffs behandeln und schliesslich, wie angegeben, bei erhöhter Temperatur fixieren.

Zum Färben aus langer Flotte geht man in eine wässrige Lösung des Farbstoffs (Flottenverhältnis 1:5 bis 1:40) bei Raumtemperatur ein und färbt 40 bis 90 Minuten, gegebenenfalls unter Erhöhung der Temperatur bis auf 95 °C und gegebenenfalls unter anteilweiser Zugabe von Salz, z.B. Natriumsulfat, und anschliessend Alkali, beispielsweise Natriumphosphaten, Natriumcarbonat, NaOH und KOH.

Hierbei tritt die chemische Reaktion zwischen Farbstoff und Faser ein. Nach erfolgter chemischer Fixierung wird das Färbegut heiss gespült und abschliessend geseift, wobei nicht fixierte Reste des Farbstoffs entfernt werden. Man erhält ausgezeichnet echte, insbesondere nass- und lichtechte Färbungen.

Im sogenannten Klotz-Kaltverweil-Verfahren lässt sich eine nachträgliche Erhitzung des geklotzten Gewebes dadurch ersparen, dass man das Gewebe einige Zeit, z.B. 2 bis 20 Stunden, bei Raumtemperatur lagert. In diesem Verfahren wird ein stärkeres Alkali als bei dem oben beschriebenen Färbeverfahren aus langer Flotte eingesetzt.

Zum Bedrucken von Hydroxylgruppen enthaltenden Materialien wird eine Druckpaste aus der Farbstofflösung, einem Verdickungsmittel, wie Natriumalginat, und einer alkalisch reagierenden oder beim Erhitzen Alkali abspaltenden Verbindung, wie Natriumcarbonat, Natriumphosphat, Kaliumcarbonat, Kaliumacetat oder Natrium- und Kaliumhydrogencarbonat, verwendet und das bedruckte Material gespült und geseift.

Amidgruppen enthaltende Textilmaterialien, wie Wolle, Seide, synthetische Polyamid- und Polyurethanfasern, werden im allgemeinen nach den hierfür üblichen Färbemethoden in saurem bis neutralem Bereich gefärbt.

Die mit den neuen Farbstoffen erhältlichen Färbungen zeichnen sich im allgemeinen durch gute bis sehr gute Echtheitseigenschaften, insbesondere durch vorzügliche Nassechtheiten aus.

Beispiel 1

In 150 ml Wasser werden 2,8 g Anilin und 30 ml 1nSalzsäure versetzt, wobei sich ein pH-Wert von 3,4 einstellt. Zu dieser Lösung lässt man bei 0–5 °C in 5 Minuten, unter Einhalten des pH-Wertes von 3,2–3,6 mit Hilfe von 1n-$NaHCO_3$– Lösung, 6,4 g 2,4,6-Trifluortriazin zutropfen und rührt unter Einhalten des angegebenen pH-Wertes noch 5 Minuten bei 0–5 °C nach.

In 400 Teilen Wasser werden 19,68 g des Farbstoffes der Formel

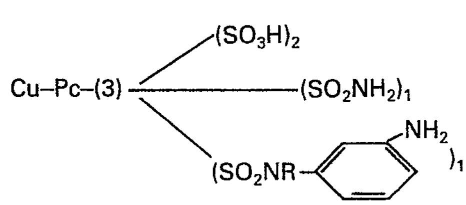

(erhalten durch Umsatz von Cu–Pc–(3)–($SO_2Cl$/$SO_3H$)$_4$ mit 3-Aminoformanilid und Ammoniak und anschliessender Verseifung der Formylaminogruppe) mit Hilfe von Natronlauge bei pH 6 gelöst. Nach Abkühlen der Lösung lässt man bei 0–5 °C unter Einhalten eines pH-Wertes von 6,0–6,5 die nach Absatz 1 erhaltene Difluortriazinylaminobenzol-Lösung in 5 Minuten zufliessen. Nach beendeter Kondensation salzt man den Farbstoff mit KCl aus, saugt ab, wäscht mit verdünnter KCl-Lösung nach und trocknet bei 50–60 °C.

Man erhält in praktisch quantitativer Ausbeute den Farbstoff, der in Form eines K-Salzes der Formel

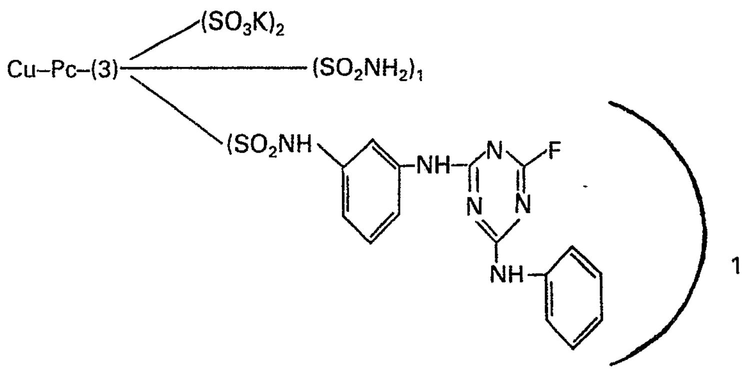

entspricht. Er färbt Baumwolle in türkisblauen Tönen.

In analoger Weise erhält man weitere wertvolle Reaktivfarbstoffe, wenn man die in Spalte 3 der nachfolgenden Tabelle 1 genannten Amine mit 2,4,6-Trifluor-1,3,5-triazin acyliert und die erhaltenen Difluortriazinylamine mit den in Spalte 2 formulierten Aminophthalicyanin-Derivaten kondensiert.

Tabelle 1

| Nr. | Aminophthalocyanin-Derivat | Amin | Farbton auf Baumwolle |
|---|---|---|---|
| 1) | 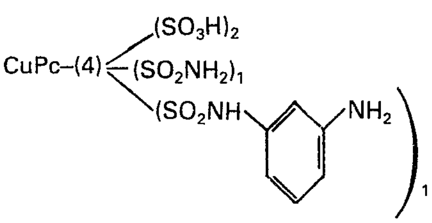 | 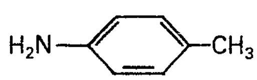 | Türkisblau |
| 2) | 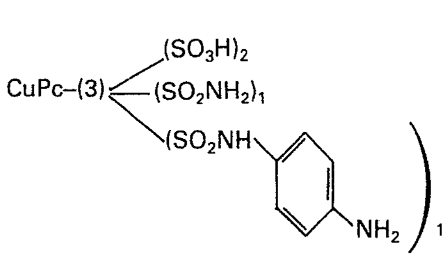 | 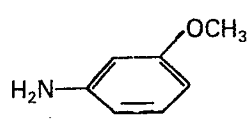 | do. |
| 3) | 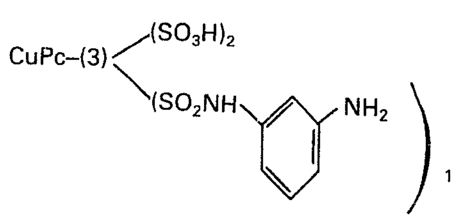 | 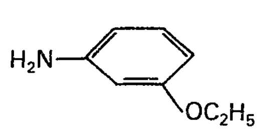 | do. |

Tabelle 1 (Fortsetzung)

| Nr. | Aminophthalocyanin-Derivat | Amin | Farbton auf Baumwolle |
|---|---|---|---|
| 4) | 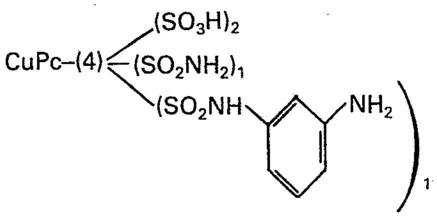 | 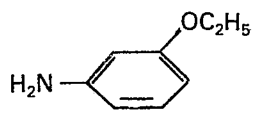 | Türkisblau |
| 5) | 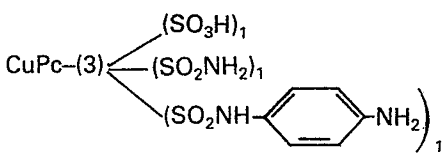 | 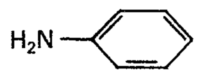 | do. |
| 6) | 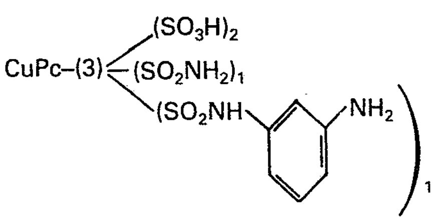 | 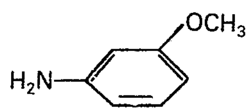 | do. |
| 7) | 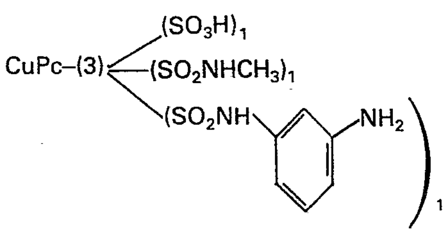 | 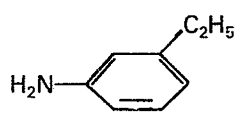 | do. |
| 8) | 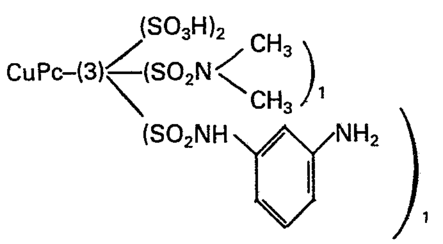 | 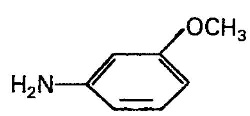 | do. |
| 9) | 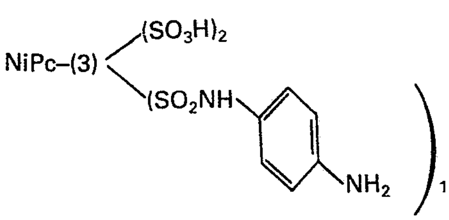 | 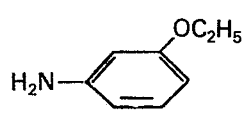 | blaustichiges Grün |
| 10) | 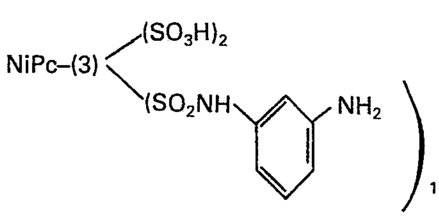 | 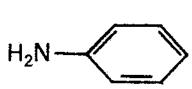 | do. |

Tabelle 1 (Fortsetzung)

| Nr. | Aminophthalocyanin-Derivat | Amin | Farbton auf Baumwolle |
|---|---|---|---|
| 11) | 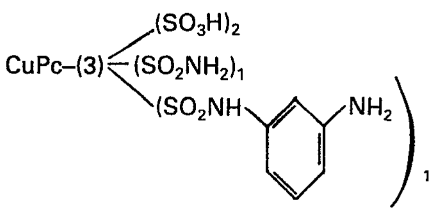 | 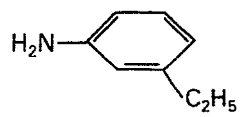 | Türkisblau |
| 12) | 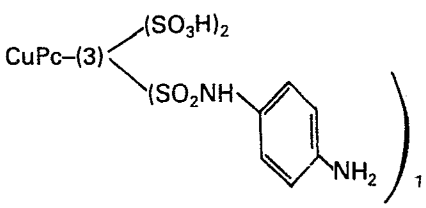 | 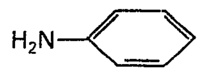 | do. |
| 13) | 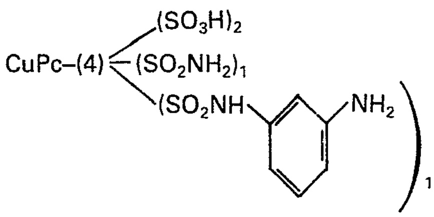 | 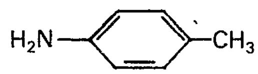 | do. |
| 14) | 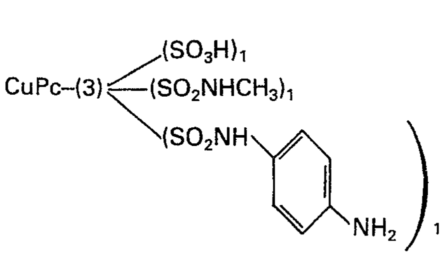 | 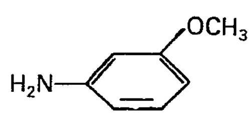 | do. |

Beispiel 2

In 300 ml Wasser werden 20 g des Farbstoffes der Formel

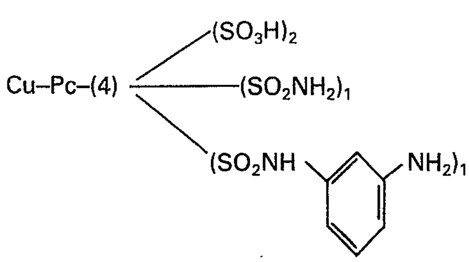

(erhalten durch Umsatz von Cu–Pc–(3)–($SO_2Cl$/$SO_3H$)$_4$ mit Monoacetyl-1,3-phenylendiamin und Ammoniak, sowie anschliessender Verseifung der Acetylaminogruppe mit Hilfe von Natronlauge bei pH 8,5 gelöst. Anschliessend gibt man bei 20 °C und pH 8,5 4 g 2,4-Difluor-6-dimethyl-amino-1,3,5-triazin innerhalb von 5 Minuten zu.

Nach beendeter Kondensation stellt man den pH-Wert der Lösung auf 6, salzt mit KCl aus, saugt ab, wäscht mit verdünnt KCl-Lösung nach und trocknet bei 50–60 °C. Man erhält in sehr guter Ausbeute den Farbstoff, der in Form seines K-Salzes der Formel

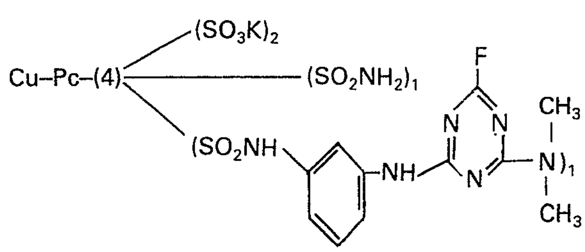

entspricht. Der Farbstoff färbt Baumwolle in türkisblauen Tönen.

In analoger Weise erhält man weitere wertvolle Reaktivfarbstoffe, wenn man die in Spalte 2 der nachfolgenden Tabelle 2 formulierten Aminophthalocyanin-Derivate mit Difluortriazinylverbindungen der Formel

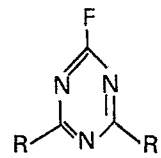

kondensiert, wobei R die in Spalte 3 angegebene Bedeutung hat.

Tabelle 2 (Fortsetzung)

| Nr. | Aminophthalocyanin-Derivat | R | Farbton auf Cellulose |
|---|---|---|---|
| 1) | 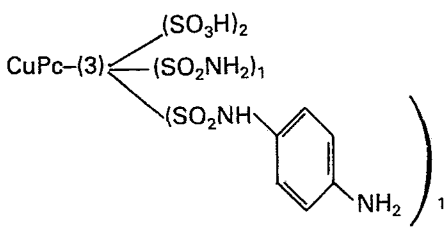 | $HNCH_3$ | Türkisblau |
| 2) | 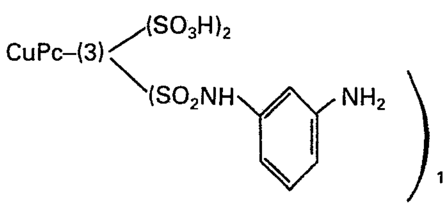 | $-N(C_2H_5)_2$ | do. |
| 3) | 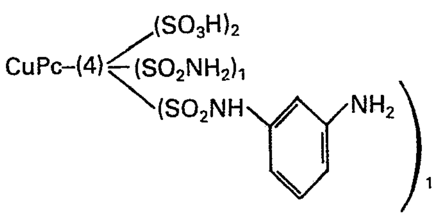 | $-N(C_4H_9)_2$ | do. |
| 4) | 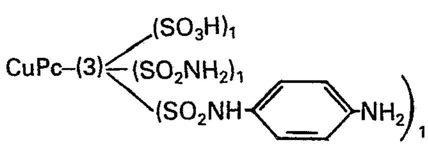 | $HN-CH_2CH_2-OH$ | do. |
| 5) | 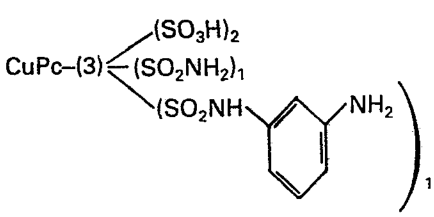 | $HN-CH_2COOH$ | do. |
| 6) | 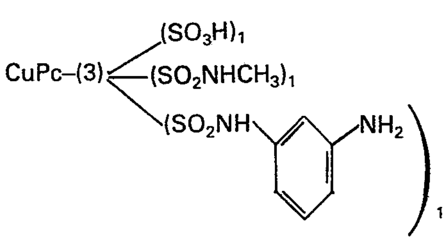 | $HN-CH_2CH_2-SO_3H$ | do. |

Tabelle 2 (Fortsetzung)

| Nr. | Aminophthalocyanin-Derivat | R | Farbton auf Cellulose |
|---|---|---|---|
| 7) | 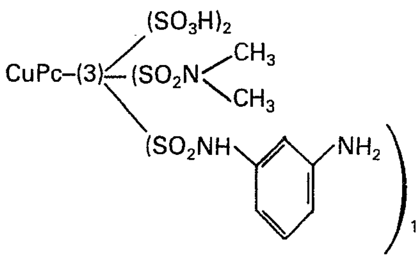 | $-N(CH_3)_2$ | Türkisblau |
| 8) | 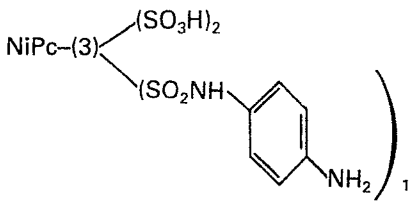 | H $NCH_3$ | blaustichiges Grün |
| 9) | 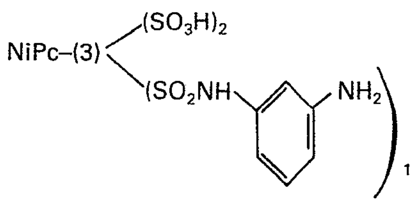 | $-N(CH_2CH_2OH)_2$ | do. |
| 10) | 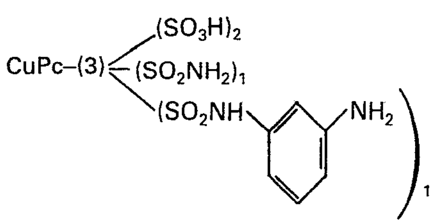 | 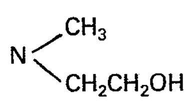 | Türkisblau |
| 11) | 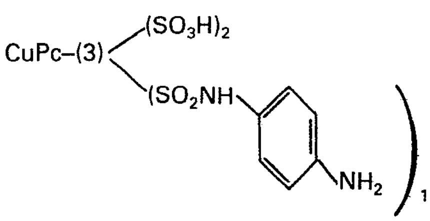 | 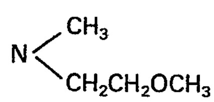 | do. |
| 12) | 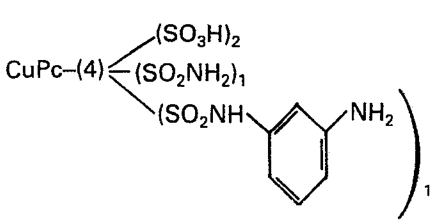 | $-N(CH_2CH_2OCH_3)_2$ | do. |
| 13) | 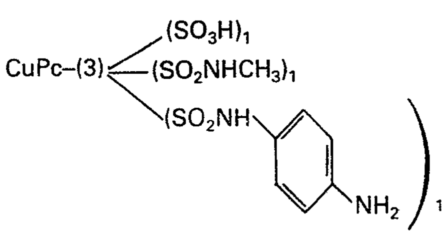 | H $NCH_2CH_2OSO_3H$ | do. |

Tabelle 2 (Fortsetzung)

| Nr. | Aminophthalocyanin-Derivat | R | Farbton auf Cellulose |
|---|---|---|---|
| 14) | 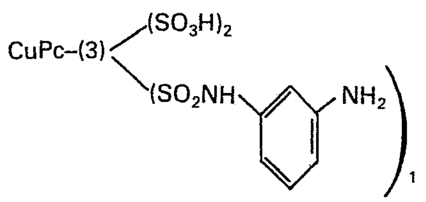 | 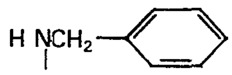 | Türkisblau |
| 15) | 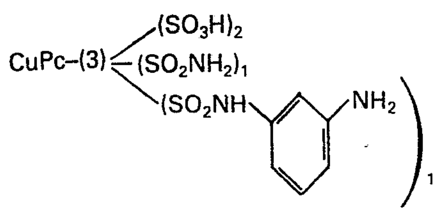 | H NCH(CH$_3$)$_2$ | do. |

Färbebeispiel 1

In einem Färbebecher von 500 ml Inhalt, der sich in einem beheizbaren Wasserbad befindet, werden 220 ml Wasser von 20–25 °C vorgelegt. Man teigt 0,3 g Farbstoff, erhalten nach Beispiel 1, Absatz 2, mit 2 ml kaltem Wasser gut an und fügt 48 ml heisses Wasser (70 °C) zu. Die Farbstofflösung mit einem pH-Wert von 7–8 wird dem vorgelegten Wasser zugegeben, wobei 10 g Baumwollgarn in dieser Färbeflotte ständig in Bewegung gehalten werden. Innerhalb von 10 Minuten erhöht man die Temperatur der Färbeflotte auf 60 °C, setzt 15 g Natriumsulfat (wasserfrei) zu und färbt 30 Minuten weiter. Dann fügt man der Färbeflotte 2 g Natriumcarbonat zu und färbt 60 Minuten bei 60 °C. Man entnimmt dann das gefärbte Material der Färbeflotte, entfernt die anhaftende Flotte durch Auswringen oder Abpressen und spült das Material gründlich zunächst mit kaltem Wasser und dann mit heissem Wasser so lange, bis die Spülflotte nicht mehr angeblutet wird. Anschliessend wird das gefärbte Material in 500 ml einer Flotte, die 0,5 g Natriumalkylsulfonat enthält, 20 Minuten lang bei Siedetemperatur geseift, erneut gespült und bei 60–70 °C in einem Trockenschrank getrocknet. Die Baumwolle wird in nassechtem, klarem und türkisblauem Ton angefärbt.

Färbebeispiel 2

3 g Farbstoff, den man nach Beispiel 1 Absatz 2 erhält, werden mit 5 g Harnstoff und 1 g m-Nitrobenzol-sulfonsaurem Natrium verrührt, mit 10 ml Wasser von 20-25 °C gut angeteigt und mit 80 ml Wasser von 20 °C unter Umrühren bei pH 7–8 gelöst. Zu dieser Lösung gibt man 20 ml einer 10%igen Natriumcarbonat-Lösung. Mit der so erhaltenen Klotzflotte werden 20 g Baumwoll-Gewebe auf einem Laborfoulard geklotzt, dessen Walzen mit einem solchen Druck aufeinandergepresst sind, dass die Flottenaufnahme des Baumwollgewebes ca. 80% seines Trockengewichtes beträgt. Das so geklotzte Gewebe wird auf einem Spannrahmen aufgespannt und im Trockenschrank während 15 Minuten bei 60–70 °C getrocknet und anschliessend 3 Minuten bei 102 °C gedämpft. Man spült dann das gefärbte Material gründlich, zunächst mit kaltem Wasser und dann mit heissem Wasser so lange, bis die Spülflotte nicht mehr angeblutet wird. Anschliessend wird das gefärbte Material in 500 ml einer Flotte, die 0,5 g Natriumalkylsulfonat enthält, 20 Minuten lang bei Siedetemperatur geseift, erneut gespült und bei 60–70 °C in einem Trockenschrank getrocknet.

Der Farbstoff ist in einem nassechten, klaren, türkisblauen Ton aufgezogen.

Färbebeispiel 3

Mit einem 20 g Wollstrang wird bei 40 °C in ein Färbebad eingegangen, das aus
0,5 g Farbstoff, erhalten nach Beispiel 1, Absatz 2 (bei pH 7–8 gelöst),
3,0 g eines Polyglykoläthers, hergestellt nach DAS 1 041 003, Beispiel 9,
5,0 g Natriumsulfat und
1,2 g Essigsäure 30%ig pro Liter, besteht und innerhalb 15 Minuten auf 80 °C erwärmt. Bei dieser Temperatur lässt man 30 Minuten verweilen, erwärmt zum Kochen und hält diese Temperatur etwa eine Stunde. Nach dem Spülen mit Wasser erhält man eine potting- und walkechte, türkisblaue Färbung.

Druckbeispiel

Ein Baumwollstück wird mit einer Druckpaste, bestehend aus 50 g Farbstoff des Beispiels 1, Absatz 2, 150 g Harnstoff, 20 g Natriumbicarbonat, 10 g m-Nitrobenzol-sulfonsaurem Natrium, 450 g einer hochviskosen Alginatverdickung und 320 g Wasser, bedruckt und in einen Dämpfer, z.B. des Typs Mather-Platt, bei 103 °C gedämpft. Der Druck wird dann mit kaltem, dann mit heissem und schliesslich wieder mit kaltem Wasser gespült. Man erhält einen nassechten, türkisblauen Druck.

**Patentansprüche**

1. Phthalocyaninreaktivfarbstoffe der Formel

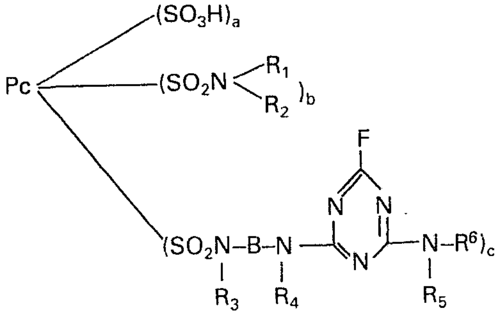

(I)

worin

Pc = Rest eines Kupfer- oder Nickel-Phthalocyanins

$R_1$, $R_2$ = H, gegebenenfalls substituiertes Alkyl oder worin $R_1$ und $R_2$ zusammen mit N einen 5- oder 6-gliedrigen heterocyclischen Ring bilden,

$R_3$, $R_4$ = H, gegebenenfalls substituiertes Alkyl

$R_5$, $R_6$ = Wasserstoff, gegebenenfalls substituiertes Alkyl mit 1 bis 5 C-Atomen, gegebenenfalls substituiertes Cycloalkyl oder Aralkyl, gegebenenfalls substituierter Aryl-Rest, der frei von Sulfonsäure- und Carbonsäure-Gruppen ist, oder worin $R_5$ und $R_6$ zusammen mit N einen 5-gliedrigen oder 6-gliedrigen heterocyclischen Ring bilden,

B = ein Brückenglied der Reihe 1,2-Phenylen, 1,3-Phenylen, 1,4-Phenylen,

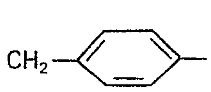 , 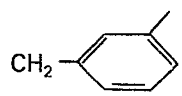 , 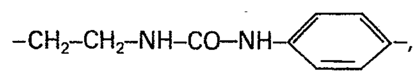

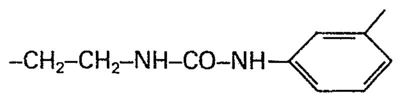 , 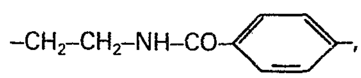

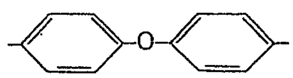 und 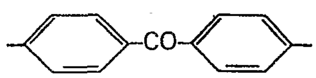 ,

a = 1 bis 3,
b = 0 bis 2,
c = 1 oder 2 und
$a+b+c \leqq 4$,

wobei jede Sulfonsäure- bzw. Sulfonamidgruppe der Farbstoffe der Formel (I) an einen anderen Benzolring des Phthalocyanins in 3- oder 4-Stellung gebunden ist und wobei die Reste $R_1$ und $R_2$; $R_3$ und $R_4$ und $R_5$ und $R_6$ gleich oder verschieden sein können.

2. Phthalocyaninreaktivfarbstoffe der Formel (I) gemäss Anspruch 1 worin Pc, $R_1$, $R_2$, $R_3$, $R_4$, $R_5$, $R_6$, B, a und b die dort angegebene Bedeutung besitzen,
c = 1 und $a+b+c=2$ bis 4.

3. Phthalocyaninreaktivfarbstoffe der Formel (I) gemäss Anspruch 1, worin
Pc, $R_1$, $R_2$, $R_3$, $R_4$, $R_5$, $R_6$, B die dort angegebene Bedeutung besitzen,
$1 < a < 3$; $b < 0$, c = 1 und $a+b+c=3$ oder 4.

4. Phthalocyaninreaktivfarbstoffe der Formel (I) gemäss Anspruch 1, worin
Pc, $R_1$, $R_2$, $R_3$, $R_4$, $R_5$, $R_6$, B die dort angegebene Bedeutung besitzen,

a = 1 oder 2
b = 0
c = 1
$a+c=$ 2 oder 3.

5. Verfahren zur Herstellung von Phthalocyaninreaktivfarbstoffen der Formel (I) gemäss Anspruch 1, dadurch gekennzeichnet, dass man aminogruppenhaltige Phthalocyaninfarbstoffe der Formel

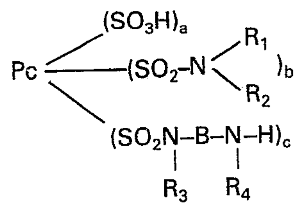

worin
Pc, $R_1$, $R_2$, $R_3$, $R_4$, B, a, b und c die in Anspruch 1 angegebene Bedeutung besitzen, mit c Mol einer Verbindung der Formel

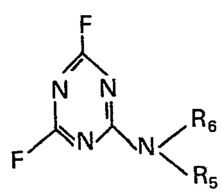

worin $R_5$ und $R_6$ die in Anspruch 1 angegebene Bedeutung besitzen, umsetzt.

6. Verwendung der Farbstoffe der Ansprüche 1–4 zum Färben und Bedrucken hydroxylgruppenhaltiger und N-haltiger Materialien, insbesondere Textilmaterialien aus nativer oder regenerierter Cellulose.

**Revendications**

1. Colorants réactifs de phthalocyanines de formule

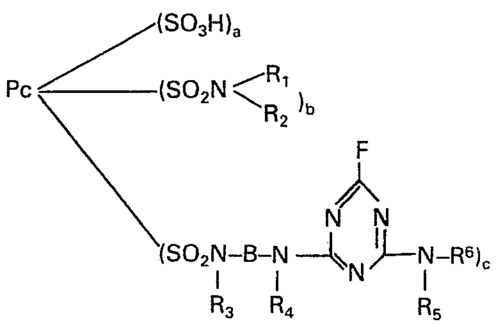

(I)

dans laquelle:

Pc = reste d'une phtalocyanine de cuivre ou de nickel,

$R_1$, $R_2$ = H, alkyle éventuellement substitué, ou bien $R_1$ et $R_2$ forment ensemble et avec N un noyau hétérocyclique à 5 ou 6 chaînons,

$R_3$, $R_4$ = H, alkyle éventuellement substitué,

$R_5$, $R_6$ = hydrogène, alkyle en $C_1$–$C_5$ éventuellement substitué, cyclo-alkyle ou aralkyle éventuellement substitué, aryle éventuellement substitué, exempt de groupes acide sulfonique et acide carboxylique, ou bien $R_5$ et $R_6$ forment ensemble et avec N un noyau hétérocyclique à 5 ou 6 chaînons,

B = un pont de la série 1,2-phénylène, 1,3-phénylène, 1,4-phénylène,

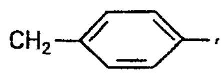 , 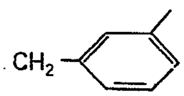 , 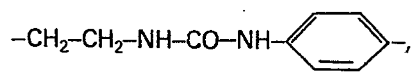 ,

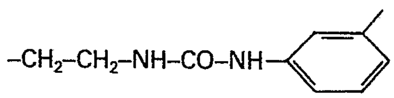 , 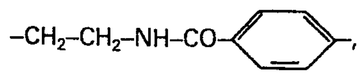 ,

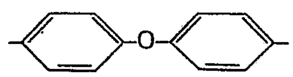 et 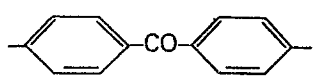 ,

a = 1 à 3,
b = 0 à 2,
c = 1 ou 2 et
a+b+c ≦ 4,

chaque groupe acide sulfonique ou sulfonamide des colorants de formule (I) étant relié à un autre cycle benzénique de la phtalocyanine en position 3 ou 4, et les restes $R_1$ et $R_2$, $R_3$ et $R_4$ et $R_5$ et $R_6$ pouvant être identiques ou différents.

2. Colorants réactifs de phtalocyanines de formule (I) selon la revendication 1, dans lesquels Pc, $R_1$, $R_2$, $R_3$, $R_4$, $R_5$, $R_6$, B, a et b ont les significations indiquées dans la revendication 1 c = 1, et a+b+c = 2 à 4.

3. Colorants réactifs de phtalocyanines de formule (I) selon la revendication 1, dans lesquels Pc, $R_1$, $R_2$, $R_3$, $R_4$, $R_5$, $R_6$ et B ont les significations indiquées dans la revendication 1

$1 < a < 3$; $b > 0$, c = 1, et a+b+c = 3 ou 4.

4. Colorants réactifs de phtalocyanines de formules (I) selon la revendication 1, dans lesquels Pc, $R_1$, $R_2$, $R_3$, $R_4$, $R_5$, $R_6$ et B ont les significations indiquées dans la revendication 1
a = 1 ou 2,
b = 0,
c = 1
a+c = 2 ou 3.

5. Procédé de préparation des colorants réactifs de phtalocyanines de formule (I) selon la revendication 1, caractérisé en ce que l'on fait réagir des colorants de phtalocyanines portant des groupes amino et répondant à la formule

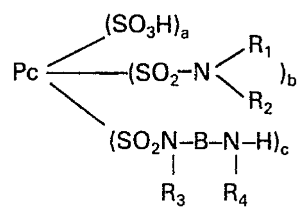

dans laquelle:

Pc, $R_1$, $R_2$, $R_3$, $R_4$, B, a, b et c ont les significations indiquées dans la revendication 1, avec c moles d'un composé de formule

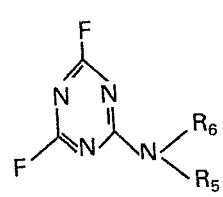

dans laquelle $R_5$ et $R_6$ ont les significations indiquées dans la revendication 1.

6. Utilisation des colorants des revendications 1 à 4, pour la teinture et l'impression de matières contenant des groupes hydroxy et contenant de l'azote, en particulier des matières textiles en cellulose naturelle ou régénérée.

**Claims**

1. Phthalocyanine reactive dyestuffs of the formula

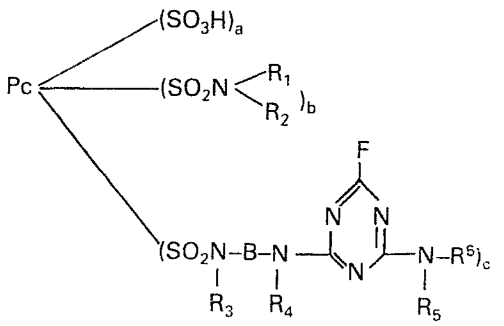

(I)

wherein

Pc = the radical of a copper phthalocyanine or nickel phthalocyanine,

$R_1$ and $R_2$ = H or optionally substituted alkyl or wherein $R_1$ and $R_2$, together with N, form a 5-membered or 6-membered heterocyclic ring,

$R_3$ and $R_4$ = H or optionally substituted alkyl,

$R_5$ and $R_6$ = hydrogen, optionally substituted alkyl with 1 to 5 C atoms, optionally substituted cycloalkyl or aralkyl, or an optionally substituted aryl radical which is free from sulphonic acid groups and carboxylic acid groups, or wherein $R_5$ and $R_6$, together with N, form a 5-membered or 6-membered heterocyclic ring

B = a bridge member of the series 1,2-phenylene, 1,3-phenylene, 1,4-phenylene,

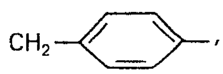, 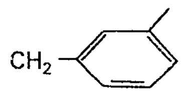, 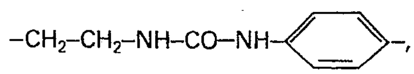,

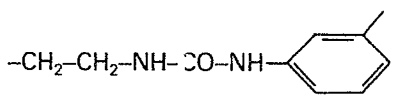, 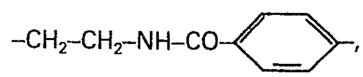,

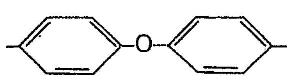 and 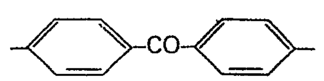,

a = 1 to 3,
b = 0 to 2,
c = 1 or 2 and
$a+b+c \leqq 4$,

each sulphonic acid group or sulphonamide group of the dyestuffs of the formula (I) being boned, in the 3-position or 4-position, to a different benzene ring of the phthalocyanine, and it being possible for the radicals $R_1$ and $R_2$; $R_3$ and $R_4$ and $R_5$ and $R_6$ to be identical or different.

2. Phthalocyanine reactive dyestuffs of the formula (I) according to Claim 1
wherein

Pc, $R_1$, $R_2$, $R_3$, $R_4$, $R_5$, $R_6$, B, a and b have the meaning indicated in that claim,

c = 1 and a+b+c=2 to 4.

3. Phthalocyanine reactive dyestuffs of the formula (I) according to Claim 1,
wherein

Pc, $R_1$, $R_2$, $R_3$, $R_4$, $R_5$, $R_6$ and B have the meaning indicated in that claim,

$1 < a < 3$; $b > 0$, c = 1 and a+b+c = 3 or 4.

4. Phthalocyanine reactive dyestuffs of the formula (I) according to Claim 1,
wherein

Pc, $R_1$, $R_2$, $R_3$, $R_4$, $R_5$, $R_6$ and B have the meaning indicated in that claim,

a = 1 or 2,
b = 0,
c = 1 and
a+c = 2 or 3.

5. Process for the preparation of phthalocyanine reactive dyestuffs of the formula (I) according to Claim 1, characterised in that phthalocyanine dyestuffs, containing amino groups, of the formula

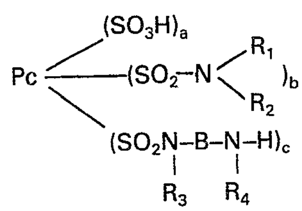

wherein

Pc, $R_1$, $R_2$, $R_3$, $R_4$, B, a, b and c have the meaning indicated in Claim 1,

are reacted with c mols of a compound of the formula

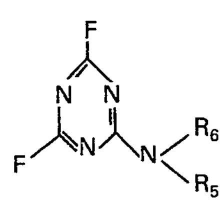

wherein

$R_5$ and $R_6$ have the meaning indicated in Claim 1.

6. Use of the dyestuffs of Claims 1–4 for dyeing and printing materials containing hydroxyl groups or N, in particular textile materials of natural or regenerated cellulose.